# EUROPEAN PATENT APPLICATION

(11) **EP 2 324 697 A1**
(43) Date of publication of application: **25.05.2011**
(21) Application number: 10190966.1
(22) Date of filing: 12.11.2010
(51) Int. Cl.: A01G 9/12, A01G 17/12

(54) **Fastening device**

(30) Priority: 23.11.2009 IT PN20090070
(71) Applicant: Bortolussi, Franco, 33080 Fiume Veneto (Pordenone) (IT)
(72) Inventor: Bortolussi, Franco, 33080 Fiume Veneto (Pordenone) (IT)
(74) Representative: Petruccelli, Davide

(57) **Abstract**

The present invention refers to a fastening device (1) for fastening a coupling body to a pole (3), comprising a winding element (4) consisting of a flexible strip, and a locking means (6) suitable to receive a couple of end regions (5a, 5b) of the winding element (4). The locking means (6) of said fastening device (1) is characterized by the fact of including a slotted body (9) that extends transversely to the longitudinal extent of said flexible strip.

Also claimed is a method of installation of said fastening device (1).

## Description

The present invention refers to a fastening device that creates a point of attachment for any type of accessories on poles or beams lacking it. In particular, this invention refers to a device for fastening accessories on a pole in the viticultural field. The present invention also refers to a method of installation of the same.

In general, in the viticultural field, the grapevines are aligned and suitably spaced apart to form rows. The structure designed to support the grapevines is formed by driving into the ground poles spaced apart and aligned with each other to form one or more rows. The poles in each row serve as supports to hold the wires that extend along the full length of the row and that are used to support the vine-shoots and arrange them in a desired configuration.

The form of these structures has progressively evolved in time into diverse configurations that basically depend on the types of vine or other fruit that are to be cultivated, on the manual or mechanized operations that are to be carried out and on other factors.

The materials used in the construction of the poles have also been progressively replaced on the basis of the requirements of strength and uniformity: initially they were made mostly from wooden poles, while nowadays they are mainly made of cement or metal, and in various forms and cross sections (round, square, rectangular, polygonal).

The same can also be said regarding the wires strung between said poles: initially they were made of galvanized iron, and in time they were replaced by stainless steel wires appropriately thought out for application in the viticultural field.

In the form that is currently most in use in the viticultural field, the row consists of a plurality of equidistant poles aligned with each other and reciprocally interconnected by a fixed horizontal wire called "carrying wire" or "training wire" that is fastened on said poles at a suitable height above the ground.

On the two poles that are placed at the ends of each row, called "head poles", are also fastened at least one pair of wires parallel to each other as well as arranged on respective sides of each pole in the row. These wires are commonly called "containment wires" or "mobile wires" because, during the different phases of cultivation of the plants, they are moved to different heights above the ground to contain and organize the growing vegetation according to a desired configuration.

The "head poles" are also suitably braced with anchor wires, or tension wires, which are themselves coupled through suitable fastening devices to the external section of the pole.

Moreover, for a systematic and efficient management of the vineyard, it is necessary to use a large number of accessories cooperating with said wires, such as, for example, wire-tensioning rollers and dampers, which facilitate and accelerate the operations of tensioning the wires and of moving the mobile wires.

For this reason, there is the necessity of realizing fastening devices on the poles, commonly called collars, that are in a sense "universal", that is, that allow the coupling, based on the different conditions of use, of the wires but also of any types of accessories, on either side of the pole.

Moreover, such fastening devices, in particular the ones used in viticulture, must be resistant particularly for what concerns the tensile stress to which they are subjected: this stress is quite high but at the same time also very variable, as can be appreciated, for example, from the difference in weight of the plants from the production season to the winter season in rows stretching even hundreds of meters, or again from the considerable "sail effect" caused by the wind blowing across a row of grapevines.

Also, it evident that said fastening devices are subject to atmospheric agents, in particular water and thermal shocks that could bring about structural changes in their constituent materials, as well as to anti-parasitic chemical agents used in viticulture that could cause the loss of the essential properties that make the collars suitable for their intended use.

Italian patent IT 1 217 262 discloses a fastening device and adjusting means for the viticultural field consisting essentially of a wire with solid cross section bent and shaped according to a form substantially matching the external peripheral surface of the pole, so as to adhere perfectly to the pole. The collar is also provided with a projecting portion forming an empty space between the surface of the pole and the wire wound around it, in which can be fastened a coupling device on which wires are installed. The coupling device includes a roll on which the wire in the row can be wound to apply on it the desired traction.

In the present state of the art there is however a wide range of cross sections in the poles that are commonly used in the field; a certain dissimilarity may be found within the same vineyard or even in the same row if, for example, a damaged pole was replaced with a pole having a different structure.

Considering the impossibility of adapting a collar of the type disclosed in IT 1 217 262 to a pole having a cross section that is unlike the one for which the collar was made, it is disadvantageously essential for the manufacturers of accessories for viticulture to prearrange the production of hundreds of collars of different forms and sizes, with consequent reduced economies of scale, the necessity of frequent variations in setting the production equipment, and increased management costs.

Another type of currently applied fastening collar consists of a pre-shaped metal or rigid plastic clip, having two ends slightly inflexed and provided with through openings that allow the clip to be closed around the external surface of the pole by means of a pin system.

Although this type of collar is provided with a minimum adjusting system that allows it to be connected to poles having cross sections of identical shape but with slight differences in diameter, it too shows scarce adaptability due to the limited overall length of the strip that forms the collar. In addition, as with the previously described collar, it remains impossible to apply it to poles having different cross sections with respect to the one for which the collar was shaped.

A main objective of the present invention is to overcome the drawbacks of devices of known type intended to be fastened to a pole. In addition, a main objective of this invention is also to overcome the drawbacks of the known methods of installation of the same.

In the scope of this objective, one purpose of the invention is to provide a fastening device that creates a point of attachment for various wires or accessories on poles or beams that lack it, in particular poles in a row of plants, said device being sufficiently flexible to adapt to the shape of the external surface of supports of any shape and size but offering at the same time the characteristics of strength and durability required for use, in particular, in the viticultural field.

A further objective of the present invention is to provide a device to be fastened to a pole that is simple to install even by a single operator and economic to produce.

A not least important objective of the present invention is to offer a method of installation of a fastening device on a pole that is simple to apply and that can be carried out by hand alone.

The above purposes and objectives, and others that will become more evident later, are achieved through the construction of a fastening device according to claim 1 and through a method of installation of the same according to claim 8.

To clarify the explanation of the present invention and of its advantages with respect to the known art, a possible non-limiting embodiment of the present invention will be described below with the help of the enclosed drawings.

In the drawings:
- Figure 1 is a front view of the fastening device according to the present invention;
- Figure 2 is a perspective view of the fastening device according to the present invention applied to a pole, and an exploded view of a possible use of the same in cooperation with accessory means to fasten an anchor wire;
- Figure 3 illustrates the fastening device of the present invention assembled on a pole and prearranged to receive a coupling body.

With reference to the above-mentioned figures, reference numeral 1 generally indicates a device for fastening one of more coupling bodies 30 to a support pole 3, for example in a row of plants in a vineyard.

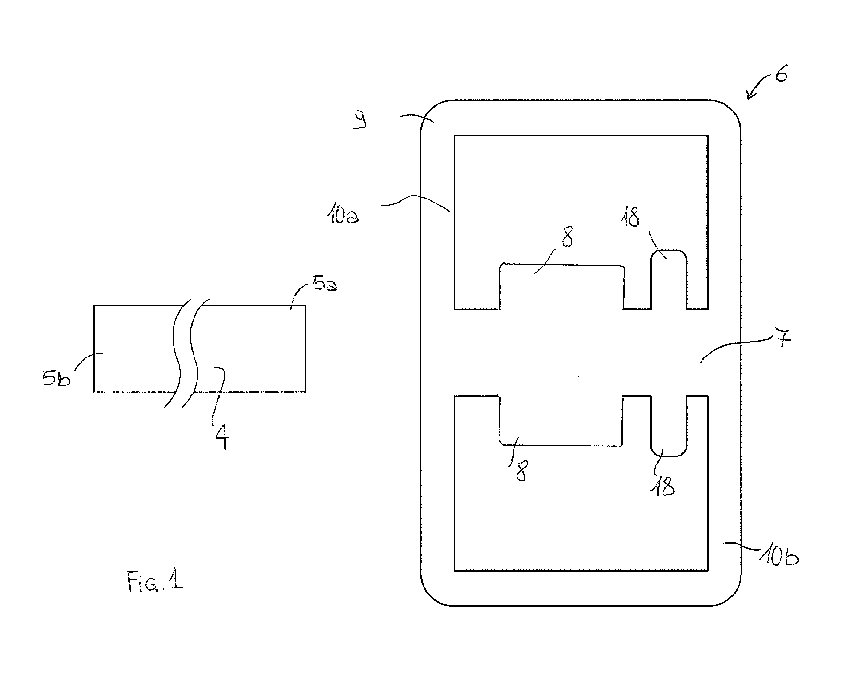

The fastening device 1 is made up of a winding element 4 and a locking means 6 (Figure 1). The winding element 4 consists preferably of a highly flexible strip, for example made of a thin sheet of metal or of plastic material, such as to perfectly adapt to the external perimetric surface of the pole 3, and is itself known and available on the market wound in a coil of standard length.

The locking means 6 is substantially a buckle, preferably made of metal or plastic material, centrally provided with a flat body 7, transversal to which extend at least two holding wings 8, at least two locking wings 18, and a slotted body 9 to be used as will be explained later.

In the phase of installation of the fastening device 7, the operator places the free end portion 5a of the strip 4 on the flat body 7 of the buckle 6 and, using known means, for example by bending the ends 5a as a hook around the flat body 7, joins the two elements.

The operator then locks the end portion 5a of the strip 4 on the buckle 6 by bending, toward each other, the holding wings 8 which, once the operation is completed form a hollow body 17 having a longitudinal through slit that, in the subsequent installation steps, makes it possible to insert within it both ends of the strip 4.

Subsequently, the strip 4 is gradually unwound from the coil while holding it from its free end portion 5a, until the operator, slowly winding the strip 4 around the pole 3, deems that a length sufficient for the operation has been extracted (that is, a length approximately equivalent to the external circumference of the pole plus a small closing portion). At this point, the strip 4 is cut at the selected length, thus forming a second end portion 5b.

The strip 4 is then wound around the pole 3, with the end 5b making one complete turn, so that then it will be near the buckle 6.

At this point, the end 5b is received inside the slit of the hollow body 17, formed by the bent holding wings 8, from the side longitudinally opposite the entry side of the end 5a, from where it is then pulled out. The strip 4 arranged in this way can be firmly tightened around the external surface of the pole 3, by simply pulling the end 5b and prying on the hollow body 17, until the strip hugs the pole perfectly. This operation can be carried out by hand or, preferably, by using a known tool for the purpose.

Once the strip 4 has been tightened to the desired tension, the end 5b is bent backward until it rests against the external part of the hollow body 17. The backward-bent end is then irremovably locked in this position by bending the locking wings 18 one against the other.

At this point, the strip that forms the fastening device is firmly connected to the support pole 3. The next step consists of creating a coupling point to the fastening device 1 for a wire or an accessory: this can be carried out by suitably operating on the slotted body 9 of the buckle 6, which, once the fastening device 1 is installed in the manner described above, appears as a slot crossed by the strip 4 locked by the locking wings 18, forming thereby two hollow lobes 10a, 10b that hug the external surface of the pole 3 on sides of the strip 4 opposite to each other.

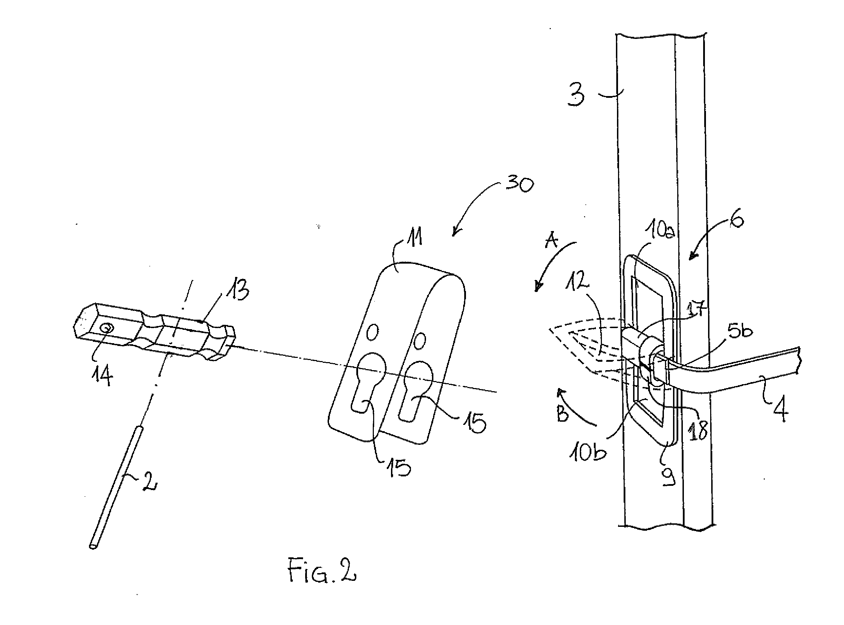

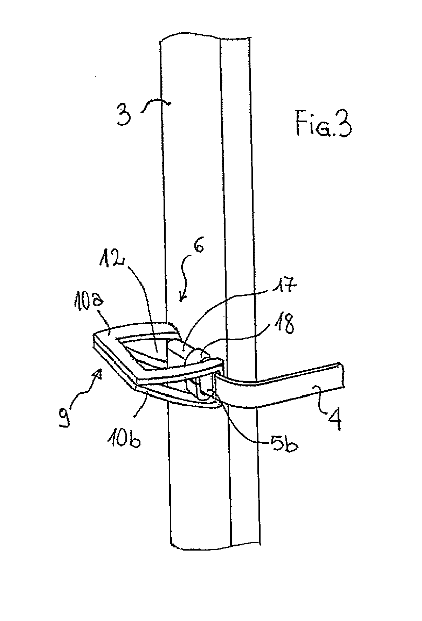

By bending the two opposite lobes 10a, 10b of the slotted body 9 toward each other by prying on the hollow body 17, as shown in Figure 2 by arrows A and B, a passage 12 is formed through the cavity of the two overlapping lobes 10a, 10b (as shown in phantom outline in Figure 2) that allows the insertion of a coupling body 30, for example by passing the end of a wire element 2 to fasten directly inside the passage 12 to form a second slot, or in the shape of a substantially U-shaped metal coupling means 11, suitable to engage with the bent slotted body 9 that provides in this manner a suitable firm support on which can be fastened any accessory or wire the operator wishes to connect to the support pole 3. The definitive configuration of the fastening device is shown in Figure 3, which displays the two lobes 10a, 10b prearranged to engage any coupling body (30).

In the embodiment shown by way of non-limiting illustration in Figure 2, the coupling means 11 is provided with through openings 15 suitably arranged and configured to allow a wire element 2, for example an anchor wire, to be inserted therein and fastened. Said wire element 2 consists of a piece of metal wire of suitable length having one end fastened to the ground through known means and methods and the other end connected to the coupling means 11.

Advantageously, on the coupling means 11 could be rotatably and removably associated a suitable rolling pin 13 of known type on which the wire elements 2 are wound as shown in Figure 2. On its lateral surface, said rolling pin 13 is provided with a hole 14 designed to receive a lever arm, such as for example a socket wrench, to facilitate the rotation of the same rolling pin 13 and thus the winding of the wire elements 2 around said surface in order to apply the proper tension.

Also, on the side of the pole 3 diametrically opposite the one on which the buckle 6 is found, the strip 4 of the fastening device 1 can be connected to another accessory device, for example a wire tensioner for a row of grapevines, thus performing two functions with a single fastening device.

A fastening device was thus obtained entailing an optimization of the use of resources for the manufacturers of accessories for the viticultural field making it possible to use a single production line to manufacture a single fastening device, suitable to create a coupling point for wire elements or various accessories, adaptable without problem to any pole configuration, thus eliminating the need of making a large range of different models and consequently achieving convenient economies of scale and avoiding having to stock considerable stock quantities of materials, with a considerable saving of materials and personnel.

A further advantage lies in the fact of requiring a small number of operations, easily carried out manually by a single operator, to assemble the above-mentioned fastening device.

Naturally, the present invention is susceptible to numerous applications, modifications or variants without thereby departing from the scope of protection as defined by the appended claims.

In addition, the materials and equipment used to realize the present invention, as well as the shapes and dimensions of the individual components, may be the most suitable for the specific requirements.

## Claims

1. Fastening device (1) for fastening a coupling body (30) to a pole (3), comprising:
- a winding element (4) comprising a flexible strip, and
- a locking means (6) suitable to receive a pair of end regions (5a, 5b) of the winding element (4),
**characterized in that** said locking means (6) comprises a slotted body (9) extending transversely to the longitudinal extent of the of said flexible strip (4).

2. Fastening device (1) according to claim 1, wherein said locking means (6) comprises a flat body (7), at least two holding wings (8), at least two locking wings (18), and the slotted body (9).

3. Fastening device (1) according to claim 2, wherein said two holding wings (8) are suitable to be folded one toward the other to form a hollow body (17).

4. Fastening device (1) according to any one of the previous claims, wherein said slotted body (9) comprises two lobes (10a, 10b) positioned on opposite sides with respect to the flat body (7) of the locking means (6).

5. Fastening device (1) according to any one of the previous claims, wherein said lobes (10a, 10b) of the slotted body (9) are bendable toward each other to form a passage (12) suitable to be associated with a coupling body (30).

6. Fastening device (1) according to claim 5, wherein the coupling body (30) comprises a coupling means (11), substantially U-shaped, provided to be inserted into the passage (12).

7. Fastening device (1) according to claim 5, wherein the coupling body (30) comprises a slot formed by a wire element (2) inserted into the passage (12).

8. Method for installing a fastening device according to one of the claims 1 to 7 **characterized by** comprising the following steps:
a) twisting a winding element (4) around a pole (3);
b) fastening the winding element (4) by means of a locking means (6);
c) bending one over the other the lobes (10a, 10b) provided on the slotted body (9) to obtain a passage (12).

9. Method for installing a fastening device (1) according to claim 8, in which step c) consists of engaging a coupling body (30) in the passage (12).
